# EUROPEAN PATENT SPECIFICATION

(11) **EP 0 336 424 B1**
(45) Date of publication and mention of the grant of the patent: **26.06.1996**
(21) Application number: 89106083.2
(22) Date of filing: 06.04.1989
(51) Int. Cl.: G11B 20/18, H04N 5/782, G11B 20/10

(54) **Data signals reproducing apparatus for helical scan recording**
Daten-Signal-Wiedergabegerät für eine Aufzeichnung mit Schrägspurabtastung
Appareil de reproduction de signaux de données pour un enregistrement à balayage hélicoidal

(30) Priority: 08.04.1988 JP 86675/88
(43) Date of publication of application: 11.10.1989
(73) Proprietor: SONY CORPORATION, Tokyo 141 (JP)
(72) Inventor: Chiba, Nobuhiro, Shinagawa-ku Tokyo (JP); Murakami, Yoshihiro, Shinagawa-ku Tokyo (JP)
(74) Representative: Schmidt-Evers, Jürgen, Dipl.-Ing.

(56) References cited:
- EP-A- 0 163 736
- EP-A- 0 240 364
- GB-A- 2 164 480

## Description

This invention relates to a data signals reproducing apparatus for helical scan recording by a rotary head. More particularly, it relates to such apparatus for reproducing data signals recorded on plural sectors provided in plural segments divided from one field.

A PCM signal processing apparatus is known from EP-A-0 163 736. The known apparatus provides correction processing so that no pulse noise (abnormal sound) is generated by the reproduction of erroneous data( e.g., unerased data) that has not been recognized as an error from an error detecting code added to the data. The format of the transmission data processed by the apparatus is such that one block of data is constituted by a plurality of PCM data items, and one segment of data is constituted by a plurality of blocks, each block being provided with a data error detecting code (CRC) and a segment address to which the block belongs. A detection circuit is provided which detects whether or not the segment addresses of reproduced data within each block within one segment are the same. When the detection circuit detects a non-coincidence, an interpolation circuit is actuated in response to the detection output and effects some form of correction processing, such as mean value interpolation, higher-order interpolation, or the holding of the previous value.

Document EP-A-0 163 736 discloses a PCM signal processing apparatus for providing correction processing so that no pulse noise is generated by the reproduction of erroneous data that has not been recognized as an error from an error detecting code added to the data. The format of the transmission data processed by the apparatus is such that one block of data is constituted by a plurality of PCM data items, and one segment of data is constituted by a plurality of blocks. Therefore, in the known apparatus one track is one segment.

In a helical scan type digital video tape recorder for recording and reproducing the NTSC composite signals, a SMPTE D-2 format is employed in which one field is divided into three segments and each segment is recorded on two helical tracks.

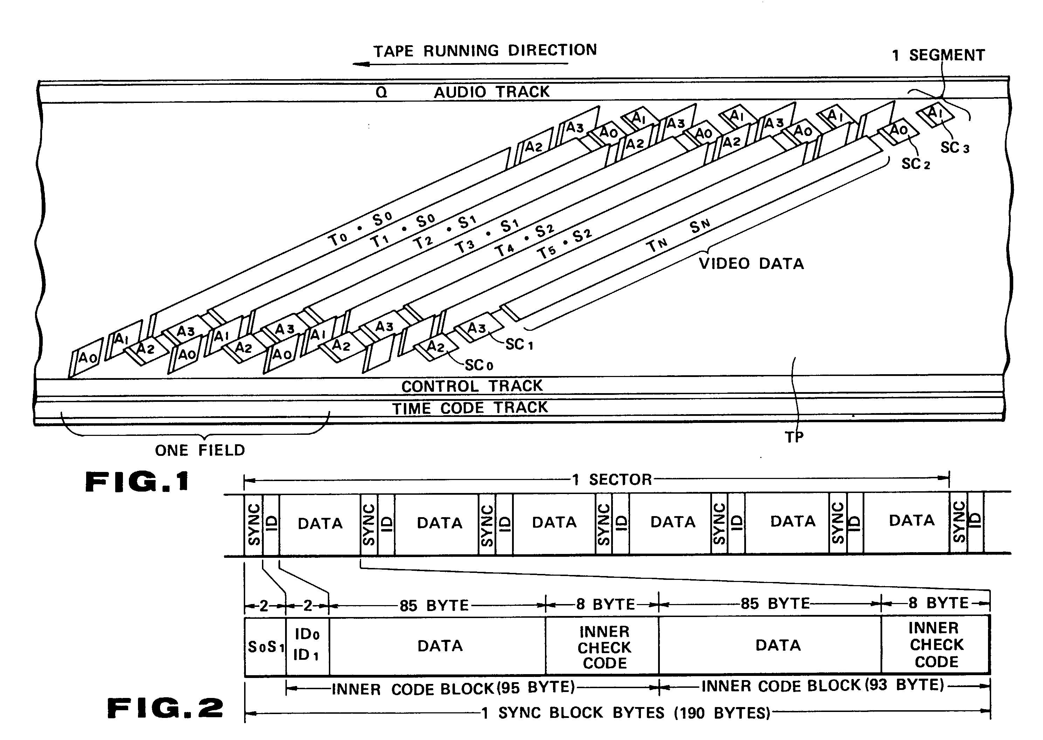

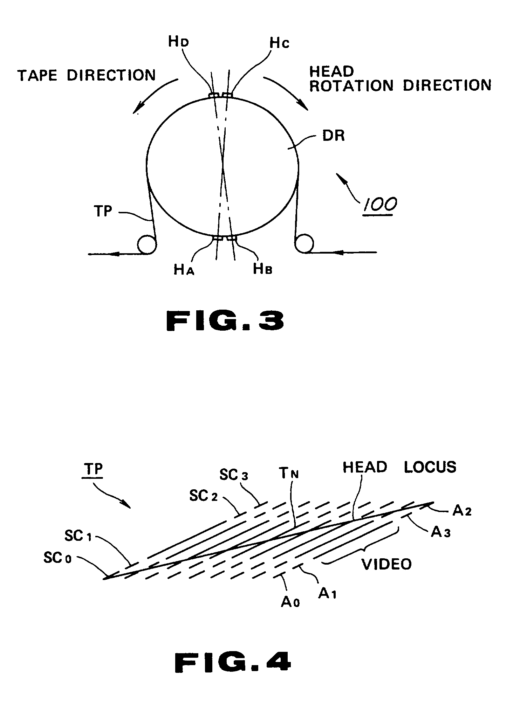

FIG.1 shows the D-2 format on a magnetic tape(TP). In this D-2 format, one segment of data is recorded on a pair of tracks, each track (T_{N}) of which has an azimuth angle different from both side tracks. Video data are recorded at the centre of each track (T_{N}). Audio data are recorded at both ends of each track (T_{N}). As for the 4-channel audio data (A₀), (A₁), (A₂) and (A₃), the data of each channel are recorded in the four sectors (SC₀), (SC₁), (SC₂) and (SC₃) provided by twos on both ends of each track (T_{N}), while the same contents are recorded with two duplications on the sectors at the separate ends of the two tracks. For example, a track(T₀) and a track (T₁) have the same audio data. FIG.2 shows a sector format. Each sector in which the 4-channel audio data (A₀), (A₁), (A₂) and (A₃) is recorded is formed of six blocks. Each block is composed of a sync (SYNC) pattern, a ID pattern wherein the segment (S_{N}) and the sector sequence information are written and inner code blocks composed of digital audio data and the check bytes. In order to reproduce the data of D-2 format, as shown in FIG.3, a rotary magnetic head device (100) is employed. The rotary magnetic head device (100) has two sets of pair heads (H_{A}), (H_{B}), (H_{C}) and (H_{D}) mounted close to the two adjacent tracks on the tape (TP). Each heads (H_{A}), (H_{B}), (H_{C}) and (H_{D}) are arranged on 180° opposite positions on a cylindrical rotary drum (DR), and a pair of heads are always caused to abut on the tape (TP).

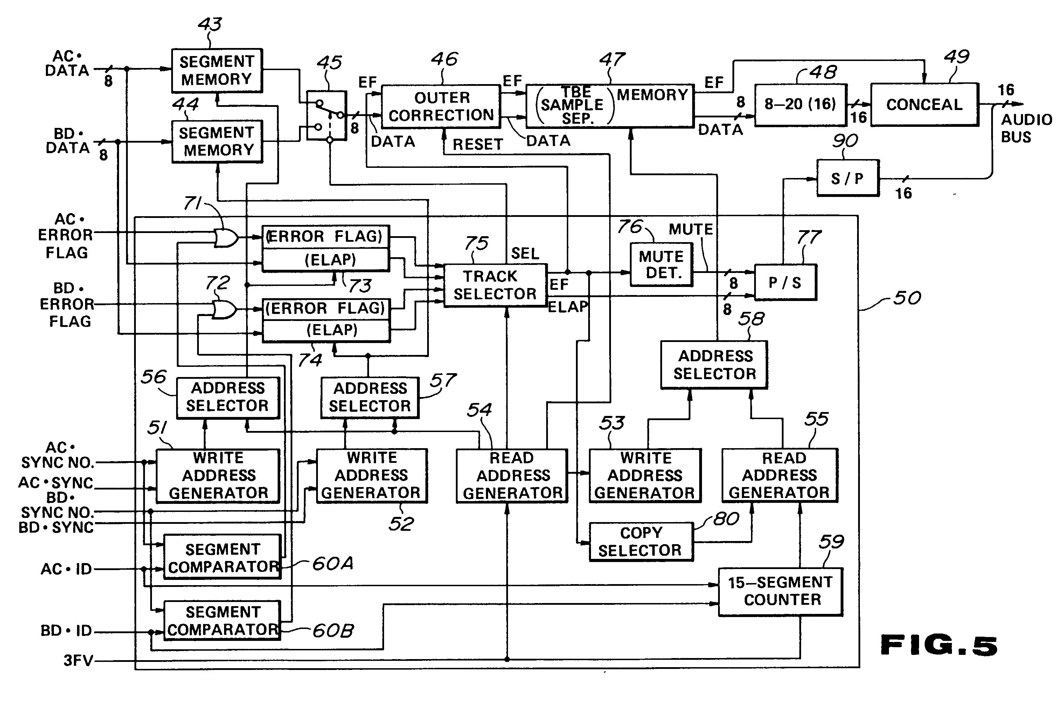

When shuttle reproduction is performed on such D-2 format, the running speed of the tape (TP) is increased. As shown in FIG.4, a locus of the head crosses a plurality of tracks(T_{N}). Data of the shuttle reproduction mode are corrected to minimize the deterioration in the playback image by using present digital technique.

However, in a digital video tape recorder adapted for reproducing the data recorded in the above described D-2 format, data of different tracks are mixed at the time of shuttle reproduction and audio data are reproduced in the state devoid of continuity. Since the data of the different tracks differ in the correction code blocks and hence cannot be corrected, the amount of data of audio signals is diminished drastically at the time of shuttle reproduction, so that the audio signals cannot be reproduced satisfactorily.

It is the object of the present invention to provide a data signals reproducing apparatus for helical scan recording system, in which the recording format is formed by plural sectors provided in plural segments divided from one field, wherein audio data can be reproduced satisfactorily even at the time of shuttle reproduction.

The object is solved by the features of claim 1. Further developments of the invention are defined by claims 2 to 4.

A preferred embodiment of the invention is described with reference to the drawings in which
FIG. 1 is a diagrammatic view showing the recording pattern of the D-2 format digital video tape recorder to which the present invention is applied;
FIG. 2 is a diagrammatic view showing the one-sector data structure in the D-2 format;
FIG. 3 is a diagrammatic view showing the D-2 format scanner construction;
FIG. 4 is a diagrammatic view showing the head locus at the time of shuttle reproduction;
FIG. 5 is a block diagram showing a concrete structural embodiment of the audio reproducing processing block constituting a reproducing system of the embodiment applied to the digital video tape recorder of the D-2 format;
FIG. 6 is a block diagram showing the construction of a reproducing system of the embodiment;
FIG. 7 is a circuit diagram showing a concrete structural example of a segment comparator of the above embodiment;
FIG. 8 is a circuit diagram showing a concrete structural example of a copy selector constituting the above embodiment.

In the particular embodiment to be described the invention is applied to a D-2 format digital video tape recorder explained with reference to FIGS. 1 to 4. As mentioned above, one field is divided into three segments,and each segment data are recorded on a pair of helical tracks by the rotary magnetic head device. Each track has four sectors on which audio data are recorded, and the pair of tracks includes the same contents of sectors.

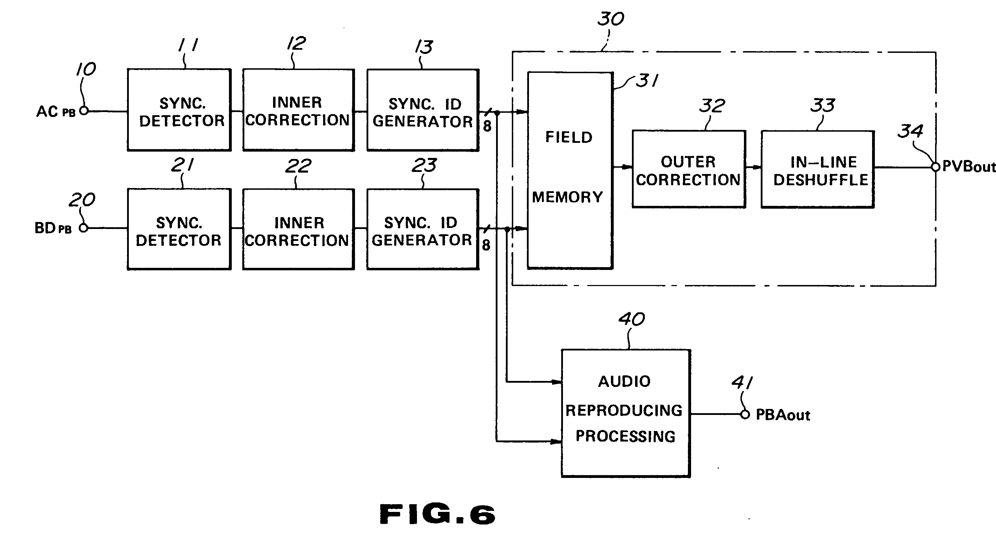

Referring now to FIG. 6, this shows a reproducing system of the digital video tape recorder of the invention. RF signals (AC_{PB}), (BD_{PB}) are reproduced by the heads (H_{A}), (H_{C}), (H_{B}), (H_{D}) of the rotary magnetic head device (100) from the magnetic tape (TP), on which the D-2 format is recorded previously. The reproduced RF signals (AC_{PB}),(BD_{PB}) are supplied to the 2-channel signal input terminals (10), (20).

Each of the reproducing RF signals (AC_{PB}) and (BD_{PB}) are supplied to the video reproducing processing block (30) and the audio reproducing processing block (40) from the 2-channel signal input terminals (10), (20) via sync detection circuits (11), (21) each inner code correction circuits (12), (22) and each SYNC ID generating circuits (13), (23).

The inner code correction circuits (12), (22) correct the data of the inner code block by using the inner check code as to the reproduced data for each channel. This inner data correction corresponds to sync signals separated from the reproducing RF signals (AC_{PB}) and (BD_{PB}) for each channel by the sync detection circuit (11), (21). Each of the SYNC ID generating circuits (13), (23) detects the sync (SYNC) pattern or the ID pattern with respect to the reproduced RF signals (AC_{PB}) and (BD_{PB}) of each channel already corrected by the inner code correction circuits (12), (22) to generate sync and ID information.

The video reproduction processing block (30) comprises a field memory (31), an outer code correction circuit (32) and a de-shuffle processing circuit (33). The field memory 31 stores the reproduced video data which already have been corrected in the inner code correction circuit(12) (22), and time base correction and rearrangment of the reproduced video data of each channel are performed in the field memory (31). In the block (30), the outer code correction circuit (32) corrects the reproduced video data with outer code, then the de-shuffle circuit (33) rearranges the data in the line. The rearranged video data (PBV_{OUT}) having an original array are outputted at the signal output terminal (34).

The audio reproduction processing block (40) receives the corrected data by the inner code correction circuits (12),(22), and serves as a time base corrector, a time base extending circuit, an outer code correction circuit, a concealing circuit, and a data de-shuffle block. The original array audio data (PBA_{OUT}) are outputted at the signal output terminal (41).

FIG. 5 shows a circuit arrangement of the audio reproduction processing block (40) of FIG. 6. The audio reproducing block (40) includes two segment memories (43),(44) each having a capacity of storing one-segment data, an outer code correction circuit (46) to which reproducing audio data (AC DATA), (BD DATA) of each channel read out from the segment memories (43), (44) are supplied via switching circuit (45), a memory circuit (47) for extending along the time axis or data selection processing of the corrected reproduced audio data by the outer code correction circuit (46), a 8-16 conversion processing circuit (48) for demodulating operation by 8-16 conversion of the reproduced audio data read out from the memory circuit (47), a concealing circuit (49) for error correction of the demodulated reproduced audio data by said 8-16 conversion processing circuit (48), and a control block (50) for controlling the operation of the various circuit blocks.

The control block (50) includes a first write address generator (51) for forming write addresses synchronized with the sync information (AC SYNC) of the reproduced audio data (AC DATA) of one channel by said SYNC ID generator (13), a second write address generator (52) for forming write addresses synchronized with the sync information (BD SYNC) of the reproduced audio data (BD DATA) of the other channel generated by said SYNC ID generator (23), a third write address generator (53) for forming write addresses synchronized with a reference sync information (3FV), and first and second read address generators (54), (55) for forming read addresses synchronized with said reference sync information (3FV). The write address by the first write address generator (51) and the read address by the first read address generator (54) are changed over by a first address selector (56) and supplied to the one segment memory (43), the write address by the second write address generator (52) and the read address by the first read address generator (54) are changed over by the second address selector (57) and supplied to the other segment memory (44), and the write address by the third write address generator (53) and the read address by the second read address generator (55) are changed over by a third selector (58) and supplied to the memory circuit (47).

It is noted that the read address generator (55) is synchronized with the reference sync information (3FV) by a 15-segment counter (59) counting the ID information (AC ID), (BD ID) of each channel generated by the SYNC ID generators (13), (23).

The control block (50) includes first and second segment comparators (60A), (60B) for detecting that the segment data have changed without the sector data being changed from using the ID information (AC ID), (BD ID) of each channel generated by the SYNC ID generators (13), (23), and memories (73), (74) for storing the edit flag data (AC ELAP), (BD ELAP) and error flag data (AC ER FLAG), (BD ER FLAG) of playback audio data (AC DATA) of each channel corrected at each inner code correction circuits (12), (22). The output of each of the segment comparators (60A), (60B) are supplied to the memories (73), (74) through OR gates (71), (72) along with the error flag data (AC ER FLAG), (BD ER FLAG) as the error detection signals.

The error flag data (AC ER FLAG), (BD ER FLAG) and edit flag data (AC ELAP), (BD ELAP) read out from the memories (73), (74) are supplied to a track selector (75). The error flag data (EF) are supplied from this track selector (75) to a copy selector (80) and to the outer code correction circuit (46) as well as to a parallel serial converter (77). The edit flag data (ELAP) are also supplied to the parallel serial converter (77) through mute detecting circuits (76).

The edit flag data (ELAP) and the error flag data (EF) converted at the parallel serial converter (77) into the serial data are again restored to the parallel data at the serial parallel converter (90) and again outputted along with the reproducing audio data (PB_{OUT}).

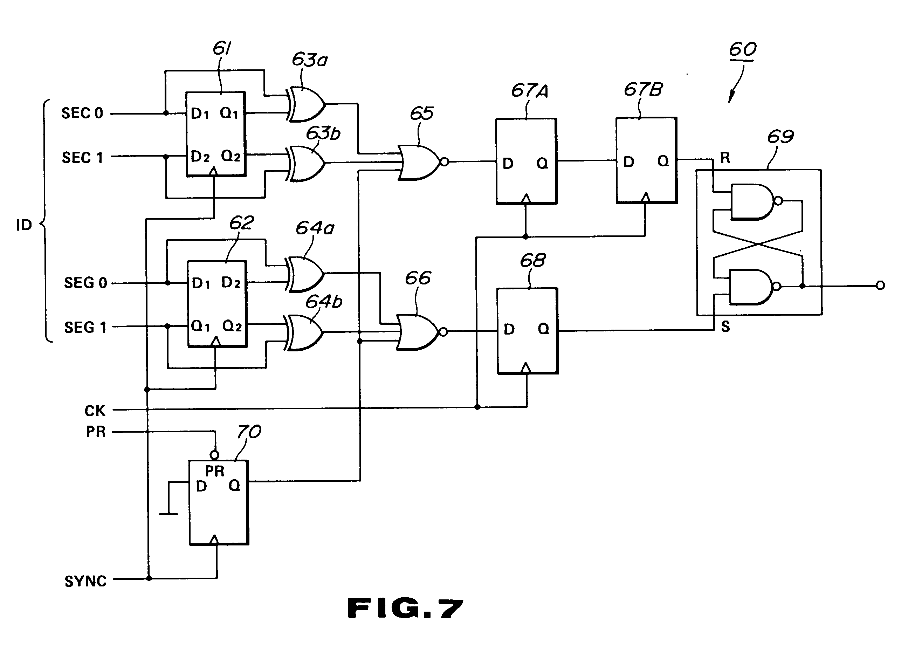

The segment comparators (60A), (60B) are constructed as shown in the circuit diagram shown in FIG. 7.

The segment comparator (60) shown in the circuit diagram shown in FIG. 7 includes D-type flipflops (61), (62) latching by sync information (SYNC) the segment data (SEG 0), (SEG 1) and sector data (SEC 0), (SEC 1) supplied as the ID information in the reproducing data, EX OR gate circuits (63a), (63b), (64a), (64b) taking an exclusive OR of the data input (D₁), (D₂) to the D-type flipflops (61), (62) and the latch outputs (Q₁), (Q₂), NOR gate circuits (65), (66) to which the gate outputs of the EX OR gate circuits (63a), (63b), (64a), (64b) are supplied, and a RS flipflop circuit (69) to which each gate outputs of the NOR gate circuits (65), (66) are supplied via D-type flipflops (67A), (67B), (68).

The EX OR gate circuits (63a), (63b), (64a), (64b) output a gate output of the logical "H" when the segment data (SEG 0), (SEG 1) or sector data (SEC 0), (SEC 1) supplied from the sync information (SYNC) are changed. The output resets the RS flipflop circuit (69) each time the sector information (SEC 0), (SEC 1) are changed, and also the output sets the RS flipflop circuit (69) each time the segment information (SEG 0), (SEG 1) are changed.

Thus, an output indicating that the segment data (SEG 0), (SEG 1) have been changed without the sector data (SEC 0), (SEC 1) supplied as the ID information in the reproduced data being changed, that is, a detection signal which is to be an error signal invalidating the playback audio data signal when the adjacent track that is within the same channel and has a different correction code block during each scan is obtained from the RS flipflop circuit (69).

According to this embodiment, when the adjacent track having the different correction code block in one channel during a scan is reproduced, each error flag data (AC ER FLAG), (BD ER FLAG) of the reproducing audio data (AC DATA), (BD DATA) of each channel corrected in the inner code correction circuits (12), (22) are forced into error by the detection outputs of the segment comparators (60A), (60B) to form error flag data (EF) which are supplied to the outer code correction circuit (46). As to the uncorrected samples, the concealing is performed from the surrounding samples by the concealing circuit (49).

In the D-2 format digital video tape recorder, 4-channel audio data (A₀), (A₁), (A₂), (A₃) are stored in the four sectors (SC₀), (SC₁), (SC₂), (SC₃) provided two each at each track (T_{N}) and recording is made so that the same contents are duplicated twice at each end sector of the two tracks of the same segment. In case of a shuttle reproduction, the first and second copies are not necessarily introduced at the same pair. In the present embodiment, select data selecting a copy with less errors are formed at the copy selector (80) so that the audio data with less error are selected at the memory circuit (47), and this select data are supplied to the second read address generator (55).

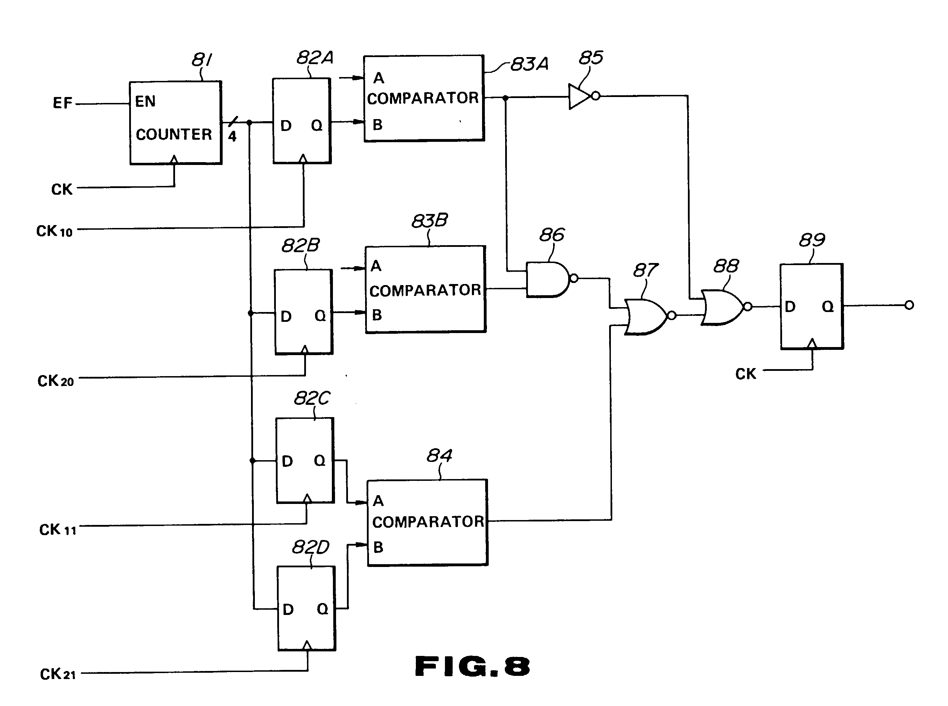

As shown in the circuit construction of FIG. 8, the copy selector (80) is constituted by a counter (81) counting the clocks (CK) with the error flag data (EF) as the count control signals, four D type flipflops (82A), (82B), (82C), (82D) latching the count output of the counter (81), comparators (83A), (83B) for comparing the latch outputs of the D type flipflops (82A), (82B) with the predetermined value "4", a comparator (84) for comparing the latch outputs of the D type flipflops (82C), (82D), and a D type flipflop (89) to the data input terminal of which the outputs of the comparators (83A), (83B) and (84) are supplied via various gate circuits (86), (87), (88).

The D type flipflop (82A) latches the count value of the error flag of the copy data and parity by the first clock (CK₁₀). The comparator (83A) outputs a logical "L" when the latch output value by the D type flipflop (82A) is not more than "4".

The D type flipflop (82B) latches the count value of the error flag of the parity and the second copy data at the second clock (CK₂₀). The comparator (83B) outputs a logical "L" when the value of the latch output by the D type flipflop 82B is not more than "4".

The D type flipflop (82C) latches the count value of the error flag of the first copy data at the third clock (CK₁₁). The D type flipflop (82D) latches the count value of the error flag of the second copy data by the fourth clock (CK₂₁). The comparator (84) compares the latch outputs of the flipflops (82C), (82D) to each other and outputs a logical "L" when the count value of the error flag of the first copy data is less than the count value of the error flag of the second copy data.

The D type flipflop (89) of the output stage outputs a select data designating the first copy data at the logical "L" and designating the second copy data at the logical "H".

In the present embodiment, error correction is performed at the outer code correction circuit (46) when the count value of the error flag of the parity and the copy data is not more than 4 and the copy data having the count value of not more than 4 is designated preferentially by the output of each comparator (82A), (82B). When both of copies have the count value of not less than 4, the copy data having less error are designated at the comparator (84).

## Claims

1. Apparatus for reproducing digital video signals, the fields of which are divided in segments (S0 , S1 ... SN) recorded on pairs of helical tracks (T), each track of said segment having four sectors (SC0, SC1, SC2, SC3) in which audio data (A0, A1, A2, A3) are recorded, the same audio data being recorded in adjacent tracks of a segment, said sectors including sector identical data (SEC 0, SEC 1) and said segments including segment identical data (SEG 0, SEG 1), said apparatus being characterised in that it comprises:
first detection means (61, 63, 65) for detecting changes of said sector identical data in reproduced sector data,
second detection means (62, 64, 66) for detecting changes of said segment identical data in reproduced segment data,
error detection means (67 - 69) connected to said first detection means (61, 63, 65) and to said second detection means (62, 64, 66) for detecting that said segment has changed without said sector being changed for generating an error signal,
forming means (45 - 49, 76, 77, 80) for forming a corrected or concealed replica of said data signals, said forming means being activated when said error signal is supplied.

2. Apparatus according to claim 1, characterized in that each of said first and second detection means comprise an EX-OR circuit (63a, 63b; 64a, 64b) being supplied with said identical data, one terminal of said EX-OR circuit being connected to latching means (61, 62), and
said error detection means comprise a RS flipflop (69) in which output signals of said first EX-OR circuit (63a, 63b) are supplied to one input terminal (R) and output signals of said second EX-OR circuit (64a, 64b) are supplied to another input terminal (S).

3. Apparatus according to anyone of claims 1 to 2, characterized in that said forming means comprise an outer code correction circuit (46) and a concealing circuit (49), said concealing circuit (49) being operated when said outer code correction circuit (46) is incapable of data correction.

4. Apparatus according to anyone of claims 1 to 3, characterized in that correction code blocks are provided in each track and said forming means comprise a concealing circuit (49) for error concealment in which a more reliable copy is selected by a copy selector (80), said copy selector (80) having a counter (81) for counting values of an error flag (EF) indicating that the adjacent track having a different correction code block during a scan is reproduced.

## Patentansprüche

1. Vorrichtung zur Reproduzierung von digitalen Video-signalen, deren Teilbilder in Segmente (S₀, S₁... S_{N}) unterteilt sind, die auf Paaren von schrägen Spuren (T) aufgezeichnet sind, wobei jede Spur des Segments vier Sektoren (SC₀, SC₁, SC₂, SC₃) hat, in denen Audiodaten (A₀, A₁, A₂, A₃) aufgezeichnet sind, wobei die gleichen Audiodaten in benachbarten Spuren eines Segments aufgezeichnet sind, wobei die Sektoren identische Sektordaten (SEC 0, SEC 1) und die Segmente identische Segmentdaten (SEG 0, SEG 1) aufweisen, wobei die Vorrichtung dadurch gekennzeichnet ist, daß sie enthält:
eine erste Ermittlungseinrichtung (61, 63, 65) zur Ermittlung von Änderungen der identischen Sektordaten in reproduzierten Sektordaten,
eine zweite Ermittlungseinrichtung (62, 64, 66) zur Ermittlung von Änderungen der identischen Segmentdaten in reproduzierten Segmentdaten,
einen Fehlerermittlungseinrichtung (67 - 69), die mit der ersten Ermittlungseinrichtung (61, 63, 65) und der zweiten Ermittlungseinrichtung (62, 64, 66) verbunden ist, zur Ermittlung, ob die Segmentdaten sich geändert haben, ohne daß sich die Sektordaten geändert haben, um ein Fehlersignal zu erzeugen,
Bildungsmittel (45 - 49, 76, 77, 80) zur Bildung einer korrigierten oder verborgenen Kopie der Datensignale, wobei die Bildungsmittel aktiviert werden, wenn das Fehlersignal geliefert wird.

2. Vorrichtung nach Anspruch 1, dadurch gekennzeichnet, daß die erste und zweite Ermittlungseinrichtung eine Exklusiv-ODER-Schaltung (63a, 63b; 64a, 64b) aufweist, die mit den identischen Daten beliefert wird, wobei ein Anschluß der Exklusiv-ODER-Schaltung mit der Speichereinrichtung (61, 62) verbunden ist, und
die Fehlerermittlungseinrichtung eine RS-Flipflop-Schaltung (69) aufweist, bei der Ausgangssignale der ersten Exklusiv-ODER-Schaltung (63a, 63b) zu einem Eingangsanschluß (R) und Ausgangssignale der zweiten Exklusiv-ODER-Schaltung (64a, 64b) zum anderen Eingangsanschluß (S) geliefert werden.

3. Vorrichtung nach einem der Ansprüche 1 bis 2, dadurch gekennzeichnet, daß die Bildungsmittel eine Außencode-Korrekturschaltung (46) und eine Verbergungsschaltung (49) aufweist, wobei die Verbergungsschaltung (49) betrieben wird, wenn die Außencode-Korrekturschaltung (46) unfähig ist, eine Datenkorrektur durchzuführen.

4. Vorrichtung nach einem der Ansprüche 1 bis 3, dadurch gekennzeichnet, daß Korrekturcodeblöcke in jeder Spur vorgesehen sind und die Bildungsmittel eine Verbergungsschaltung (49) zur Fehlerverbergung aufweisen, in welcher eine verläßlichere Kopie von einem Kopieselektor (80) ausgewählt wird, wobei der Kopieselektor (80) einen Zähler (81) zum Zählen von Werten eines Fehler-Flags (EF) aufweist, welches anzeigt, daß die benachbarte Spur, die einen anderen Korrekturcodeblock während einer Abtastung hat, reproduziert wird.

## Revendications

1. Appareil pour reproduire des signaux vidéo numériques dont les trames sont divisées en segments (S0, S1, ..., SN) enregistrés sur des paires de pistes hélicoïdales (T), chaque piste desdits segments ayant quatre secteurs (SC0, SC1, SC2, SC3) dans lesquels des données audio sont enregistrées, les mêmes données audio étant enregistrées dans des pistes voisines d'un segment, lesdits secteurs comprenant des données identiques de secteur (SEC 0, SEC 1) et lesdits segments comprenant des données identiques de segment (SEG 0, SEG 1), ledit appareil étant caractérisé en ce qu'il comprend:
- des premiers moyens de détection (61, 63, 65) pour détecter des changements desdites données identiques de secteur dans les données de secteurs reproduites;
- des deuxièmes moyens de détection (62, 64, 66) pour détecter des changements desdites données identiques de segment dans les données de segments reproduites;
- des moyens de détection d'erreurs (67 à 69) connectés auxdits premiers moyens de détection (61, 63, 65) et auxdits deuxièmes moyens de détection (62, 64, 66) pour détecter que ledit segment a changé sans que ledit secteur ait changé, pour produire un signal d'erreur;
- des moyens de formation (45 à 49, 76, 77, 80) pour former une réplique corrigée ou dissimulée desdits signaux de données, lesdits moyens de formation étant activés lorsque ledit signal d'erreur est fourni.

2. Appareil selon la revendication 1, caractérisé en ce que chacun desdits premiers et deuxièmes moyens de détection comprend un circuit OU exclusif (63a, 63b; 64a, 64b) auquel sont fournies lesdites données identiques, une borne dudit circuit OU exclusif étant connectée à des moyens de verrouillage (61, 62) et lesdits moyens de détection d'erreurs comprennent une bascule RS (69) dans laquelle les signaux de sortie dudit premier circuit OU exclusif (63a, 63b) sont fournis à une borne d'entrée (R) et les signaux de sortie dudit deuxième circuit OU exclusif (64a, 64b) sont fournis à une autre borne d'entrée (S).

3. Appareil selon l'une quelconque des revendications 1 et 2, caractérisé en ce que lesdits moyens de formation comprennent un circuit de correction de code extérieur (46) et un circuit de dissimulation (49), ledit circuit de dissimulation (49) étant mis en action lorsque ledit circuit de correction de code extérieur (46) est incapable de corriger les données.

4. Appareil selon l'une quelconque des revendications 1 à 3, caractérisé en ce que des blocs de code de correction sont prévus dans chaque piste et lesdits moyens de formation comprennent un circuit de dissimulation (49) pour la dissimulation d'erreurs dans lequel une copie plus fiable est sélectionnée par un sélecteur de copie (80) ayant un compteur (81) pour compter les valeurs d'un drapeau d'erreur indiquant que la piste voisine ayant un bloc de code de correction différent pendant un balayage est reproduite.
